# EUROPÄISCHE PATENTANMELDUNG

(11) **EP 1 830 120 A1**
(43) Veröffentlichungstag der Anmeldung: **05.09.2007**
(21) Anmeldenummer: 07004250.2
(22) Anmeldetag: 01.03.2007
(51) Int. Cl.: F16L 41/08, F16B 4/00, F16B 12/40, B25B 27/02

(54) **Befestigungsmittel**

(30) Priorität: 01.03.2006 DE 202006003155 U
(71) Anmelder: Haboe Edelstahl-Systeme GmbH, 35285 Gemünden-Wohra (DE)
(72) Erfinder: Böhl, Harald, 35285 Gemünden-Grüsen (DE)
(74) Vertreter: Buchhold, Jürgen

(57) **Zusammenfassung**

Eine Kunststoff-Schlitzhülse 10 hat einen Flansch oder Kragen 22 am Kopf 18 eines außen und/oder innen verjüngten Buchsenkörpers 12, dessen unteres Ende 14 durch axial offene Schlitze oder Kerben 16 in Segmente 20 gegliedert ist. Sein Außenkonus ist im Durchmesser einer Aufnahmebohrung 24 in einem Tragkörper angepasst, z.B. einem Rohr R, während sein Innenkonus der Bemessung eines zu spannenden Stabs S (oder Rohrs) entspricht. Vorzugsweise sind am Buchsenkörper 12 drei endseitig offene Kerben 16 in Umfangsabständen von 120° vorgesehen, die drei gleichartige, bogen- oder lappenförmige Segmente 20 voneinander trennen. In dem z.B. waagrecht verlaufenden Tragkörper oder Rohr R kann eine Anzahl von vorzugsweise linear angeordneten Radialbohrungen 24 vorhanden sein, in welche die Hülsen 10 zur Klemmaufnahme einer entsprechenden Anzahl von z.B. senkrechten Stäben S (oder Rohren) einsetzbar sind.

## Beschreibung

Die Erfindung betrifft Befestigungsmittel gemäß den Oberbegriffen von Anspruch 1 und Anspruch 11.

Auf den verschiedensten Gebieten ist es erforderlich, sichere Materialverbindungen herzustellen. Neben Niet- und Klebverbindungen sowie Schraubbefestigungen ist vor allem das Verschweißen üblich. Bei optisch anspruchsvollen Gestaltungen erweist es sich allerdings als ungünstig, dass Schweißnähte nachbearbeitet werden müssen, was allgemein erheblichen Zeitaufwand und entsprechend hohe Kosten verursacht.

Das trifft unter anderem auch im Geländerbau zu, wo längliche Elemente wie Stäbe und Rohre von unterschiedlichen Bemessungen miteinander zu verbinden oder Flachteile wie Platten. Bleche u.dgl. beispielsweise an Trägern oder Gerüsten anzubringen sind. Sollen etwa dünne Stäbe an dickeren Stangen oder Handläufen befestigt werden, so kommt es nicht allein konstruktiv auf festen Sitz der Teile. sondern vielfach auch ästhetisch auf übersichtliche Gestaltung mit klaren Konturen an. Störende Nebenelemente sind ebenso zu vermeiden wie schlecht oder nicht zugängliche Ecken und Hohlkehlen, die einer Verschmutzung und Korrosion ausgesetzt sein können.

Vor diesem Hintergrund ist es ein wichtiges Ziel der Erfindung, verbesserte Mittel zur einfachen und zuverlässigen Verbindung insbesondere von Stäben und Rohren vorzusehen. Dabei wird eine schnelle und kostengünstige Montage angestrebt, und die verbundenen Elemente sollen dauerhaft zuverlässig belastbar sein.

Hauptmerkmale der Erfindung sind in Anspruch 1 und in Anspruch 11 angegeben. Ausgestaltungen sind Gegenstand der Ansprüche 2 bis 10 sowie 12 bis 19.

Eine Befestigungshülse zur formschlüssigen Verbindung von ungleich dimensionierten Bauelementen, insbesondere von Stäben und Rohren, weist erfindungsgemäß einen Buchsenkörper auf, der in ein erstes Bauteil einfügbar ist. das größer als ein zweites, in den Buchsenkörper einpassbares Bauteil ist, wozu der Buchsenkörper außen und/oder innen verjüngt ausgebildet ist und an seinem unteren Ende Segmente hat, die an einer Bohrung im ersten Bauteil verkeilbar sind.

Dadurch ist es möglich, Stäbe und Rohre - beispielsweise für Geländer- oder Gitteranordnungen - ohne aufwendige Schweißarbeiten miteinander zu verbinden. Das gerade bei optisch ansprechenden Konstruktionen oft notwendige Nachbearbeiten der Schweißnähte entfällt ersatzlos. Die Verbindungen lassen sich ohne großen Zeit- und Kostenaufwand rasch und bequem herstellen. Die Hülse wird dazu über die Segmente in dem ersten Bauteil fest fixiert. Anschließend wird das zweite Bauteil in die Hülse eingeführt und dort form- und/oder reibschlüssig festgelegt.

Die Hülse besteht vorzugsweise aus einem elastisch und/oder plastisch verformbaren Material, z.B. aus Kunststoff, Gummi o.dgl., so dass sie sich beim Fügen den vorgegebenen Öffnungen oder Aussparungen sowie den Außenkonturen der Bauteile ohne weiteres anpassen kann. Werden die Kunststoffhülsen zudem in gleicher Farbe und Design wie das Rohr- bzw. Stabmaterial ausgebildet, entsteht eine optisch stets einwandfreie und saubere Verbindung.

Zweckmäßig ist der Buchsenkörper an seinem unteren Ende mit Ausnehmungen versehen, welche die Segmente voneinander trennen, wodurch diese sich an den gegebenen Öffnungen oder Aussparungen der Bauteile verklemmen können. Die bevorzugt als Kerben, Schlitze o.dgl. gestalteten Ausnehmungen enden in Axialrichtung offen und sind daher leicht spreizbar.

Indem man die Ausnehmungen am Buchsenkörper-Ende symmetrisch anordnet, insbesondere rotationssymmetrisch, wird das kleinere Bauteil in der Art eines Spannfutters gefasst. Dazu können namentlich drei (oder mehr) Ausnehmungen in Umfangsabständen von z.B. 120° vorhanden sein, so dass drei gleichartige Segmente konzentrisch an dem zu halternden Bauteil angreifen, d.h. es in der Art eines Spannfutters sicher fassen.

Vorteilhaft weist der Buchsenkörper an seinem oberen Ende einen Flansch oder Kragen auf. Dieser bildet einen Anschlag, welcher an einer Bohrung ein zu tiefes Einbringen der Hülse verhindert. Außerdem wird durch den Kragen eine gute Formanpassung an die Oberflächen-Begrenzung der Bohrungen des größeren Bauteils sichergestellt. Alternativ kann der Flansch oder Kragen auch bereits gekrümmt oder gebogen ausgebildet sein. Eine Anpassung an die Außenkonturen des ersten Bauteils ist dann nicht notwendig, was den Montageaufwand weiter reduziert.

Optimal ist der Buchsenkörper in seiner Außenbemessung einer Aufnahme-Bohrung im ersten Bauteil und In seiner Innenbemessung den Außenmaßen des zweiten Bauteils angepasst, z.B. einem zu spannenden Stab.

Anspruch 11 sieht ein Werkzeug zum Anbringen einer Hülse der vorgenannten Art an einem ersten, größeren Bauteil vor, insbesondere an einem Tragkörper oder Rohr, wobei an einem Haltestück zum Eintreiben und Aufweiten der Hülse ein am freien Ende gerundeter und/oder zugespitzter Dorn vorhanden ist, der in Form und Abmessungen dem zweiten Bauteil genau angepasst ist, z.B. einem Stab. Mit einem solchen Werkzeug lassen sich die Hülsen rasch und mühelos an bzw. in Bohrungen des ersten Bauteils setzen, worauf man die zweiten Bauteile in die Hülsen einfügt.

Das Haltestück oder ein daran vorgesehener Schaft hat vorzugsweise einen zylindrischen Abschnitt, dessen Durchmesser gleich jenem des zu spannenden Stabs ist und von dem aus der Dorn verjüngt ausläuft, insbesondere kegelförmig. Letzterer kann im Haltestück auswechselbar angeordnet und z.B. mittels eines in ein radiales Gewindeloch des Haltestücks Einschraubbahren Gewindestifts fixierbar sein.

Mit besonderem Vorteil weist das Haltestück eine Schneidkante auf, die eine dem Tragkörper oder Rohr angepasste Radius- oder Flachkontur hat und am Haltestück umlaufend angeordnet ist, namentlich an einem freien Ende eines zylindrischen Schafts. Im Bereich der Schneidkante ist eine Umlegkante ausgebildet, die an der in die Bohrung des größeren Bauteils eingetriebenen Hülse beim Drehen des Werkzeugs den Hülsen-Innenrand einfaltet, der sich dadurch an der Innenwandung des größeren Bauteils formschlüssig abstützt. Gleichzeitig trennt die Schneidkante überstehende Teile des Flanschs bzw. Kragens an der Außenseite des Tragkörpers bzw. Rohrs ab, wobei es günstig ist, wenn das Werkzeug wenigstens eine Einstecköffnung für eine Handhabe aufweist, z.B. für einen Stift oder Steckschlüssel, mit dem sich das Werkzeug bequem drehen lässt.

Das Werkzeug ist erfindungsgemäß zum Einsetzen von Hülsen in Bohrungen ausgebildet und deren Durchmesser angepasst, in welche die Hülsen zur Klemmaufnahme von Stäben, Rohren o.dgl. einfügbar sind. Von großem Vorteil ist dabei, dass der Dom auswechselbar ist; man kann also jeweils einen Dorn benutzen, der genau auf die Abmessungen der zu halternden zweiten Bauteile abgestimmt ist. Diese können bei einem häufigen Anwendungsfall an dem größeren Bauteil, z.B. einem Tragkörper oder Rohr, in linearer Reihe angeordnet sein. Man erkennt, dass auf diese Weise zum Beispiel ein Geländer mit überaus geringem Aufwand schnell und exakt montierbar ist.

Durch die rasche, bequeme und sichere Montage der bzw. jeder Schlitzhülse, die den zu halternden Stab oder das Rohr in sattem Formschluss aufnimmt und überaus fest klemmt, ist die Verbindungsstelle zugleich oben bzw. außen dicht geschlossen, so dass keine Feuchtigkeit eindringen kann. Der Stab ist so vom Trägerrohr isoliert. Daher ist außer einer Vibrationsdämpfung auch ein Schutz gegen Kontaktkorrosion gegeben. und es können edlere Werkstoffe mit unedleren verbunden werden, ohne dass elektrochemische Spannungen entstehen. Ferner lassen sich, wo das erforderlich oder gewünscht ist, elektrische Leitungen stromisoliert und gegen mechanische Einwirkungen geschützt führen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine Schrägansicht einer erfindungsgemäßen Hülse,
- Fig. 1a: eine vergrößerte Seitenansicht der Hülse von Fig. 1,
- Fig. 1b: eine verkleinerte Draufsicht der Hülse von Fig. 1 bzw. 1a,
- Fig. 2: eine Seitenansicht einer anderen Ausführungsform einer erfindungsgemäßen Hülse.

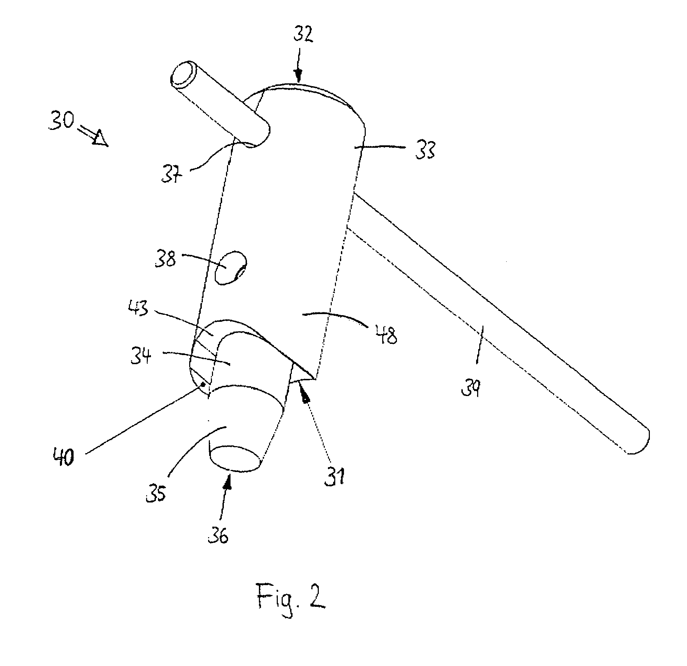

- Fig. 2: eine Schräg-Druntersicht eines erfindungsgemäßen Werkzeugs,

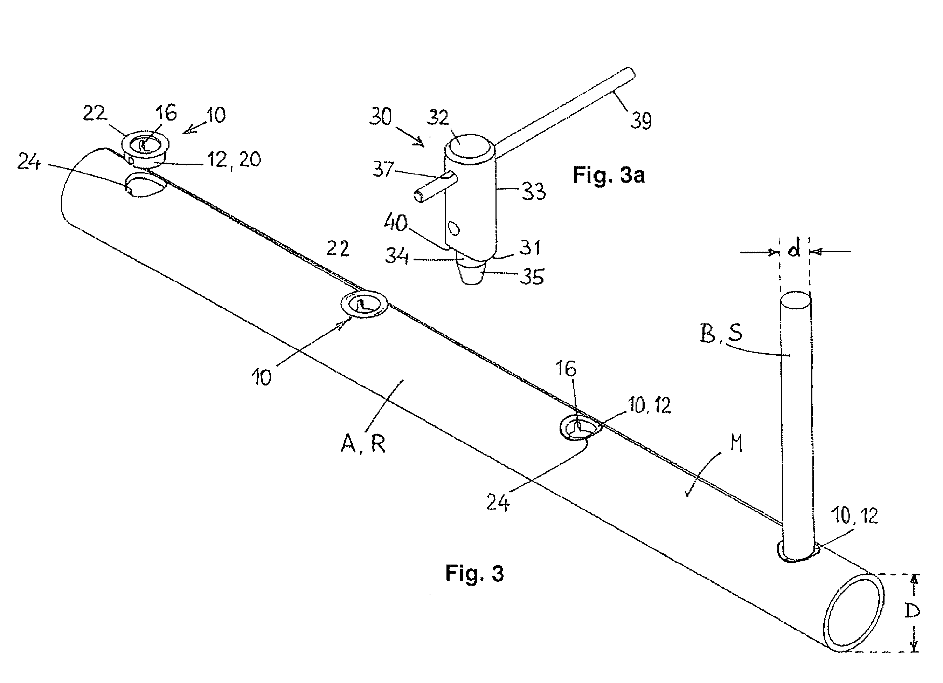

- Fig. 3: eine Schrägansicht eines Tragrohrs,
- Fig. 3a: eine Fig. 3 zugeordnete Schräg-Draufsicht eines Werkzeugs und

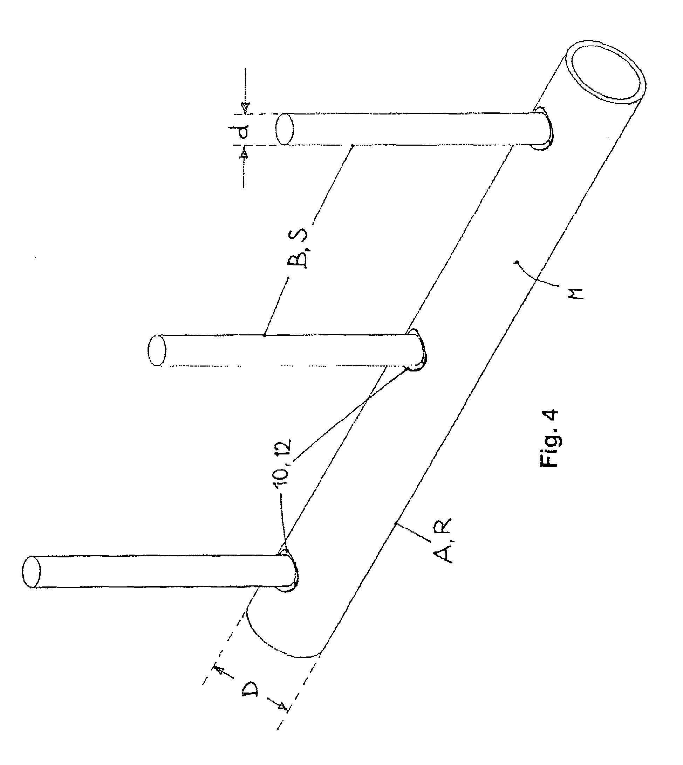

- Fig. 4: eine Schrägansicht eines Tragrohrs mit hülsenmontierten Stäben.

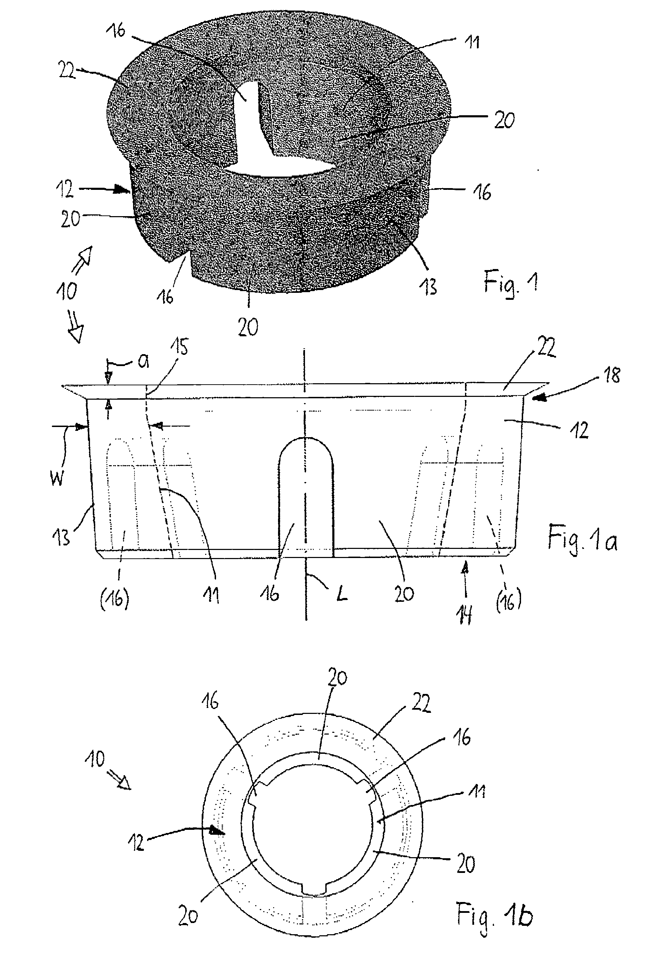

Die in Fig. 1, 1a, 1b dargestellte, allgemein mit 10 bezeichnete Hülse ist als Schlitzhülse ausgebildet. Sie dient - wie Fig. 3 und 4 zeigen - zur formschlüssigen Verbindung von ungleich dimensionierten Bauelementen R, S bevorzugt der Festlegung von Stäben S in Rohren R. Letztere sind hierzu umfangsseitig mit Bohrungen 24 versehen, welche die Schlitzhülsen 10 kraft- und/oder formschlüssig aufnehmen.

Jede Schlitzhülse 10 hat einen Buchsenkörper 12 mit einer Innenwandung 11 und einer Außenwandung 13, die beide bezogen auf die Längsachse L konisch verlaufen. Die Konizität der Innenwandung 11 ist dabei deutlich größer als die Konizität der Außenwandung 13, so dass die Wandstärke W des Buchsenkörpers 12 vom oberen Ende 18 bis zu dessen unteren Ende 14 hin zu nimmt. Die Außenwandung 13 ist - wie Fig. 1a zeigt - nur schwach konisch, während die stark konisch ausgeprägte Innenwandung 11 im Bereich des oberen Endes 18 des Buchsenkörpers in einen zylindrischen Endbereich 15 ausläuft.

In dem Buchsenkörper 12 sind in regelmäßigen Abständen drei nach unten offene Ausnehmungen 16 eingebracht. Diese können die Form von Kerben oder Schlitzen haben. Sie unterteilen den unteren, dicker werdenden Konusbereich des Buchsenkörpers 12 in drei gleichartige Segmente 20.

An seinem oberen Ende 18 weist der Buchsenkörper 12 einen Flansch oder Kragen 22 auf. Dessen axiale Höhe a kleiner ist als die Wandstärke W des Buchsenkörpers 12 bzw. der Segmente 20 an der schmalsten Stelle. Diese befindet sich im Bereich des oberen Endes 18 des Buchsenkörpers 12, mithin im Bereich des zylindrischen Endbereichs 15.

Die Hülse 10 wird in die Bohrung 24 des Rohres R eingesetzt, wobei sich der Flansch bzw. Kragen 22 an der Bohrungsbegrenzung des Rohres R anlegt.

Fig. 2 zeigt ein Werkzeug 30, das ein Haltestück 32 z.B. in Form eines zylindrischen Schafts 33 aufweist, der in seinem oberen Bereich eine Einstecköffnung 37 für eine stift- oder stabförmige Handhabe 39 hat. An seinem unteren Bereich ist das Haltestück 32 mit einer Schneidkante 31 versehen, die eine im Wesentlichen U-förmige Zylindermantelfläche 43 mit einer randseitig ausgebildeten Umlegekante 40 begrenzt. Der (nicht näher bezeichnete) Radius der Zylindermantelfläche 43 entspricht dem Radius der Außenmantelfläche M des Rohres R, in dem die Stäbe S befestigt werden sollen.

Das Haltestück 32 trägt ferner mittig einen Dorn 35, dem ein zylindrischer Abschnitt 34 vorgeordnet ist. Der Dorn 35 ist vorzugsweise stumpfkonisch gestaltet und mit seinem zylindrischen Abschnitt 34 in dem Haltestück 32 auswechselbar gehalten. Letzteres ist hierzu mit einer Zentralbohrung 48 versehen. Ein Radial-Gewindeloch 38 nimmt einen (nicht gezeichneten) Gewindestift auf, um den Dorn 35 in dem Haltestück 32 zu fixieren.

Die Benutzung der Schlitzhülse 10 geht ebenso einfach wie rasch vor sich (siehe Fig. 3). Die bzw. jede Hülse 10 wird in eine Bohrung 24 des Trägerrohrs R eingesetzt und mit dem Werkzeug 30 eingetrieben. Dessen Konusdorn 35 weitet dabei die Segmente 20 radial nach außen auf, so dass der Buchsenkörper 12 radial gegen die Wand der Bohrung 24 verpresst und mit seinen Segmenten 20 an der Innenwandung des Trägerrohrs R verkeilt wird. Gleichzeitig drücken die Umlegekante 40 und die Zylindermantelfläche 43 den Flansch bzw. den Kragen 22 der Hülse 10 gegen die Außenmantelfläche M des Rohres, wobei der Flansch bzw. der Kragen 22 unter Einwirkung der Zylindermantelfläche 43 verformt und den Konturen des Rohres angepasst wird. Dreht man nun noch das Werkzeug 30, dann trennt die Schneidkante 31 außen überstehende Teile des relativ dünnen Buchsenkragens 22 rundum ab, so dass ein stets sauberer Abschluss entsteht.

Die Hülse 10 ist sicher in der Bohrung 24 des Rohres gehalten, während der Flansch bzw. Kragen 22 sauber und exakt an der Außenmantelfläche M des Rohres R anliegt.

Wichtig ist, dass die Konizität der Innenwandung 11 des Buchsenkörpers 12 und/oder die Wandstärke W des Buchsenkörpers 12 so groß bemessen sind, dass sich die lichte Weite Dx der Hülse 10 auch nach deren Montage im Rohr R nach unten bzw. innen hin verengt und an der engsten Stelle stets kleiner ist als der Außendurchmesser des im Rohr R zu montierenden Stabes S. Der Buchsenkörper 12 ist mithin in seiner Innenbemessung den Außenmaßen des Stabes S bzw. des zweiten Bauteils B angepasst.

Ist die Hülse 10 eingesetzt, wird der zu halternde Stab S in den Buchsenkörper 12 eingedrückt, z.B. mit einem PVC-Hammer. Dieser Vorgang kann durch ein verdunstendes Gleitmittel erleichtert werden; der damit bequemer einführbare Stab S spreizt die Segmente 20 des Buchsenkörpers 12 nach außen, so dass sich ein stets spielfreier und stabiler Sitz ergibt. Nach dem Verdunsten des Gleitmittels ist der Stab S sicher im Buchsenkörper 12 gespannt.

Fig.4 zeigt eine Anordnung von drei montierten dünneren Stäben S. die an einem dickeren Rohr R in Hülsen 10 gehaltert sind.

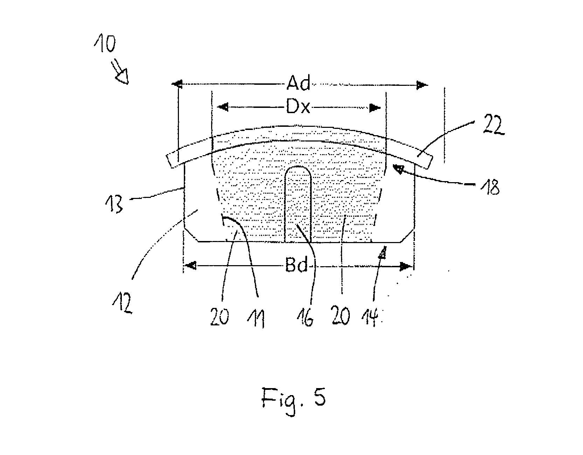

Die in Fig. 5 dargestellte Schlitzhülse 10 entspricht vom Aufbau her im Wesentlichen der Hülse 10 von Fig.1. Lediglich die Außenwandung 13 des Buchsenkörpers 12 ist nicht leicht konisch, sondern zylindrisch ausgebildet. Der Buchsenkörper 12 ist jedoch auch hier in seiner Außenbemessung der Aufnahme-Bohrung 24 im ersten Bauteil A bzw. im Rohr R angepasst, so dass sich die Hülse 10 stets rasch und bequem einsetzen lässt.

Wie Fig. 5 weiter zeigt, ist der Flansch bzw. der Kragen 22 der Hülse 10 im Querschnitt bogenförmig ausgebildet und damit der Kontur der Außenmantelfläche M des Rohres R angepasst. Eine Verformung der Hülse 10 ist nicht notwendig.

Das Einsetzen der Hülse 10 von Fig. 5 in die Aufnahmebohrung 24 des Rohres R kann damit auch von Hand erfolgen, weil weder eine Formanpassung noch ein Abschneiden überstehender Flanschreste notwendig ist. Das Werkzeug 30 wird daher für die Montage der Hülse 10 und der Stäbe S in dem Rohr R nicht benötigt.

Man erkennt mithin, dass die Schlitz- oder Montagehülse 10 Bestandteil eines Montagesystems ist. Sie wird kraft- und/oder formschlüssig in ein erstes Bauteil A. R eingefügt, das größer als ein zweites Bauteil B, S ist. Letzteres wird formschlüssig in den Buchsenkörper 12 eingeführt und dort reibschlüssig gehalten. Die Hülse 10 übernimmt dabei mehrere Funktionen. Sie führt das Bauteil B, S in dem Bauteil A, R und dichtet beide nach außen hin ab. Für die Festlegung ist weder ein Schweißgerät noch sonstige Fixiermittel erforderlich. Die bevorzugt aus Kunststoff gefertigte Hülse 10 verhindert zudem die im Bereich von Stahlgeländern häufig auftretende Spalt- und Kontaktkorrosion.

Die Erfindung ist in vielfältiger Weise abwandelbar und nicht auf eine der beschriebenen Ausführungsformen beschränkt, auch nicht auf die Verbindung von Bauteilen aus Rundmaterial. Wichtig ist, dass die Klemmkraft je nach Anwendungsfall durch die Konizität des Buchsenkörpers 12, die Anzahl und Breite sowie Axialtiefe der Kerben 16 und die Wandstärke W konstruktiv leicht festgelegt werden kann. Die Ausnehmungen 16 müssen nicht kreisrund oder bogenförmig sein.

Verwendet man Hülsen 10, deren Buchsenkörper 12 Polygonform hat und z.B. eine quadratische Kontur aufweist, so lassen sie sich zur Klemmhalterung von zumindest an ihrem zugeordneten Ende formgleich profilierten Stäben S in der Art von Schlossschrauben an einem Tragkörper fixieren. der beispielsweise auch plattenförmig sein kann. Eckige Buchsenkörper 12 haben zweckmäßig einen aus z.B. vier seitlichen Kragenteilen bestehenden Flansch 22.

Zusammenfassend ist hervorzuheben, dass das gesamte Befestigungssystem mit den Befestigungshülsen 10 der Erfindung nur wenige Bestandteile erfordert. Jede Kunststoff-Schlitzhülse 10 hat dabei einen Flansch oder Kragen 22 am Kopfende 18 eines außen und/oder innen verjüngten Buchsenkörpers 12, dessen unteres Ende 14 durch axial offene Schlitze oder Kerben 16 in Segmente 20 gegliedert ist. Seine gegebenenfalls leicht konische Außenwandung 13 ist im Durchmesser einer Aufnahmebohrung 24 in einem Tragkörper angepasst, z.B. einem Rohr R, während seine stark konische Innenwandung 11 der Bemessung eines zu spannenden Stabs S (oder Rohrs) entspricht. Vorzugsweise sind am Buchsenkörper 12 drei endseitig offene Kerben 16 in Umfangsabständen von 120° vorgesehen, die drei gleichartige, bogen- oder lappenförmige Segmente 20 voneinander trennen.

In dem z.B. waagrecht verlaufenden Tragkörper oder Rohr R (Fig. 4) kann eine Anzahl von vorzugsweise linear angeordneten Radialbohrungen 24 vorhanden sein, in welche die Hülsen 10 zur Klemmaufnahme einer entsprechenden Anzahl von z.B. senkrechten Stäben S (oder Rohren) einsetzbar sind.

Das erfindungsgemäße Werkzeug 30 hat zum Eintreiben und Aufweiten der Hülse 10 einen kegeligen Dorn 35 an einem Haltestück 32, das einen Schaft 33 aufweisen kann. Die Dornabmessungen sind dem jeweils zu spannenden Stab S (oder Rohr) angepasst. Eine Schneidkante 31 am freien Ende 36 des Haltestücks 32 oder im Bereich des Übergangs vom Schaft 33 zu einem zylindrischen Abschnitt 34 am oberen, breiteren Ende des Dorns 35 besitzt vorzugsweise eine dem Trägerrohr R angepasste Radius- oder Flachkontur 43. Letztere dient dazu den Flansch oder Kragen 22 an die Außenkontur des Rohres R anzupassen, während die Schneidkante 31 nach dem Einbau der Hülse 10 überstehende Teile des Flanschs bzw. Kragens 22 durch einfache Drehbewegung des Werkzeugs 30 abtrennt. Der auswechselbare Dorn 35 ist z.B. mittels eines Gewindestifts im Haltestück 32 fixierbar.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein,

### Bezugszeichenliste

| | |
|---|---|
| A erstes (größeres) Bauteil | S Stäbe / Stützrohre |
| B zweites (kleineres) Bauteil | a Axialtiefe |
| Dx lichte Weite | d Durchmesser von B |
| L Längsachse | D Durchmesser von A |
| M Außenmantelfläche | W Wandstärke |
| R Tragkörper / (Quer-) Rohr | |
| | |
| 10 Hülse | 33 Schaft |
| 11 Innenwandung | 34 zylindrischer Abschnitt |
| 12 Buchsenkörper | 35 (Kegel-) Dorn |
| 13 Außenwandung | 36 freies Ende |
| 14 unteres Ende | 37 Einstecköffnung |
| 15 zylindrischer Endbereich | 38 Radialloch (für Gewindestift) |
| 16 Ausnehmungen / Kerben | 39 Handhabe / Stift |
| 18 oberes Ende | 40 Umlegkante |
| 20 Segmente | 43 Zylindermantelfläche |
| 22 Flansch / Kragen | 48 Zentralbohrung |
| 24 (Aufnahme-) Bohrungen | |
| 30 Werkzeug | |
| 31 Schneidkante | |
| 32 Haltestück | |

## Patentansprüche

1. Befestigungshülse (10) zur formschlüssigen Verbindung von ungleich dimensionierten Bauelementen (A, B), insbesondere von Stäben (S) und Rohren (R),
■ mit einem Buchsenkörper (12), der in ein erstes Bauteil (A, R) einfügbar ist, das größer als ein zweites, in den Buchsenkörper (12) einpassbares Bauteil (B, S) ist.
■ wozu der Buchsenkörper (12) außen und/oder innen verjüngt ausgebildet ist und
■ an seinem unteren Ende (14) Segmente (20) aufweist.
■ die an einer Bohrung (24) im ersten Bauteil (A) verkeilbar sind.

2. Hülse nach Anspruch 1, **dadurch gekennzeichnet, dass** sie aus einem elastisch und/oder plastisch verformbaren Material besteht, z.B. aus Kunststoff, Gummi o.dgl.

3. Hülse nach Anspruch 1 oder 2, **dadurch gekennzeichnet, dass** der Buchsenkörper (12) an seinem unteren Ende (14) mit Ausnehmungen (16) versehen ist, welche die Segmente (20) voneinander trennen.

4. Hülse nach Anspruch 3, **dadurch gekennzeichnet, dass** die Ausnehmungen (16) in Axialrichtung offen enden.

5. Hülse nach Anspruch 3 oder 4, **dadurch gekennzeichnet, dass** die Ausnehmungen (16) als Kerben, Schlitze o.dgl. gestaltet sind.

6. Hülse nach einem der Ansprüche 3 bis 5, **dadurch gekennzeichnet, dass** die Ausnehmungen (16) am Buchsenkörper (12) symmetrisch angeordnet sind, insbesondere rotationssymmetrisch.

7. Hülse nach einem der Ansprüche 3 bis 6, **dadurch gekennzeichnet, dass** in Umfangsabständen wenigstens drei Ausnehmungen (16) vorhanden sind, welche gleichartige Segmente (20) voneinander trennen.

8. Hülse nach einem der Ansprüche 1 bis 7, **dadurch gekennzeichnet, dass** der Buchsenkörper (12) an seinem oberen Ende (18) einen Flansch oder Kragen (22) aufweist.

9. Hülse nach Anspruch 8, **dadurch gekennzeichnet, dass** der Flansch oder Kragen (22) gekrümmt oder gebogen ausgebildet ist.

10. Hülse nach einem der Ansprüche 1 bis 9, **dadurch gekennzeichnet, dass** der Buchsenkörper (12) in seiner Außenbemessung einer Aufnahme-Bohrung (24) im ersten Bauteil (A) und in seiner Innenbemessung den Außenmaßen des zweiten Bauteils (B) angepasst ist, z.B. einem zu spannenden Stab (S).

11. Werkzeug (30) zum Anbringen einer Hülse (10) nach einem der Ansprüche 1 bis 10 an einem ersten bzw. größeren Bauteil (A), insbesondere an einem Tragkörper oder Rohr (R), **dadurch gekennzeichnet, dass** es an einem Haltestück (32) zum Eintreiben und Aufweiten der Hülse (10) einen Dorn (35) aufweist, dessen freies Ende (36) gerundet und/oder zugespitzt ist und dessen Abmessungen einem in der Hülse (10) zu halternden zweiten Bauteil (B) angepasst sind, z.B. einem Stab (S).

12. Werkzeug nach Anspruch 11, **dadurch gekennzeichnet, dass** das Haltestück (32) insbesondere an einem Schaft (33) einen zylindrischen Abschnitt (34) aufweist, dessen Durchmesser (d) gleich jenem eines zu spannenden Stabs (S), Rohrs o.dgl. ist und von dem aus der Dorn (35) verjüngt ausläuft, insbesondere kegelförmig.

13. Werkzeug nach Anspruch 11 oder 12, **dadurch gekennzeichnet, dass** der Dorn (35) im Haltestück (32) auswechselbar angeordnet ist.

14. Werkzeug nach Anspruch 13, **dadurch gekennzeichnet, dass** der Dorn (35) z.B. mittels eines in ein Radialloch (38) Einschraubbahren Gewindestifts im Haltestück (32) fixierbar ist.

15. Werkzeug nach einem der Ansprüche 11 bis 14, **dadurch gekennzeichnet, dass** das Haltestück (32) mit einer Schneidkante (31) versehen ist, welche eine dem Tragkörper oder Rohr (R) angepasste Radius- oder Flachkontur hat.

16. Werkzeug nach Anspruch 15, **dadurch gekennzeichnet, dass** die Schneidkante (31) am Haltestück (32) umlaufend angeordnet ist, namentlich an einem freien Ende eines zylindrischen Schafts (33).

17. Werkzeug nach Anspruch 15 oder 16, **dadurch gekennzeichnet, dass** im Bereich der Schneidkante (31) eine Umlegkante (40) vorhanden ist.

18. Werkzeug nach einem der Ansprüche 11 bis 17, **dadurch gekennzeichnet, dass** es wenigstens eine Einstecköffnung (37) oder Ansetzflächen für eine Handhabe aufweist, z.B. für einen Stift (39) oder Steckschlüssel.

19. Werkzeug nach einem der Ansprüche 11 bis 18, **dadurch gekennzeichnet, dass** es zum Einsetzen von Hülsen (10) in Bohrungen (24) ausgebildet und deren Durchmesser (d) angepasst ist, welche an dem größeren Bauteil (A), z.B. einem Tragkörper oder Rohr (R), insbesondere in linearer Reihe angeordnet und in welche die Hülsen (10) zur Klemmaufnahme von Stäben (S), Rohren o.dgl. einsetzbar sind.
